Europäisches Patentamt

European Patent Office

Office européen des brevets

(19)

(11) Veröffentlichungsnummer: **0 000 591**
**B1**

(12) **EUROPÄISCHE PATENTSCHRIFT**

(21) Anmeldenummer: **78200003.8**

(22) Anmeldetag: **01.06.78**

(51) Int. Cl.³: **B 23 K 1/12**

(54) **Vorrichtung zur Herstellung einer Lötverbindung zwischen sich überlappenden Dachrinnenteilen**

(30) Priorität: **18.07.77 DE 2732370**

(43) Veröffentlichungstag der Anmeldung:
**07.02.79 Patentblatt 79/03**

(45) Bekanntmachung des Hinweises auf die Patenterteilung:
**15.10.80 Patentblatt 80/21**

(84) Benannte Vertragsstaaten:
**BE CH DE FR GB LU NL SE**

(56) Entgegenhaltungen:
**DE - C - 426 483**
**GB - A - 1 367 899**
**US - A - 1 924 799**
**US - A - 2 166 998**
**US - A - 2 216 073**
**US - A - 2 718 863**

(73) Patentinhaber: **Rheinisches Zinkwalzwerk GMBH & Co. KG**
**Bahnhofstrasse 90**
**D - 4354 Datteln (DE)**

(72) Erfinder: **Grimm, Herbert**
**Schmiedestrasse 1a**
**D - 4716 Olfen (DE)**
**Groth, Volker**
**Rönhagenweg 2**
**D - 4716 Olfen (DE)**
**Marx, Hans**
**Ricarda-Huch-Strasse 49**
**D - 4370 Marl (DE)**

(74) Vertreter: **Fischer, Ernst, Dr.**
**Reuterweg 14**
**D - 6000 Frankfurt am Main 1 (DE)**

Courier Press, Leamington Spa, England.

### Vorrichtung zur Herstellung einer Lötverbindung zwischen sich überlappenden Dachrinnenteilen

Die Erfindung betrifft eine Vorrichtung zur Herstellung einer Lötverbindung zwischen sich überlappenden Ender von Dachrinnenteilen, zwischen denen ein Lot deponiert, vorzugsweise ein Lotband eingelegt ist, bestehend aus zwei gegeneinander preßbaren Spannbacken, von denen die innere Spannbacke schwenkbar angelenkt ist und zwischen deren im verspannten Zustand parallel zueinander verlaufenden, dem Profil der Dachrinnenteile vom Wulst bis zum Wasserfalz im Bereich der sich überlappenden Enden angepaßten Spannflächen die sich überlappenden, auf Löttemperatur zu erwärmenden Enden aufeinander preßbar sind.

Dachrinnenteile aus NE-Metallen, verzinktem Stahl, insbesondere Zink oder Zinklegierungen, werden im allgemeinen durch Löten in ihren Überlappungsbereichen miteinander verbunden, wobei es bei der Verwendung von verzinktem Stahl erforderlich ist, die Dachrinnenteile vor dem Löten durch Nieten miteinander zu verbinden. Beim Löten selbst arbeitet man meistens mit dem Lötkolben. Bevorzugt wird ein kupferner Kolben in Spitz- oder Hammerform. Zur Entfernung von Oxyden und Lotresten wird die heiße Spitze oder Schneide des Lötkolbens auf Salmiakstein abgerieben; dann bringt man Lötzinn auf den Salmiakstein und reibt den Lötkolben solange darauf ab, bis sich die Arbeitsfläche des Lötkolbens gut verzinnt hat. Auf den vorher mit Flußmittel behandelten Überlappungsbereich wird das Lötzinn mit dem Lötkolben aufgetragen. Das Lot soll dem Lötkolben nachfließen. Die Überlappung bei der Dachrinnenlötung beträgt mindestens 10 mm; bei der Lötverbindung der Dachrinne mit einem Rinnenendstück mindestens 4 mm. Die zu lötenden Flächen sollen dicht aneinanderliegen, so daß eine möglichst dünne Lotschicht, die eingeschwemmt wird, die Verbindung herstellt. Während der Lötung und bis zur Erstarrung des Lotes müssen die zu verbindenden Teile festgehalten oder eingespannt bleiben. Damit das eingeschwemmte Lot erstarren kann, muß der Lötvorgang immer dann unterbrochen werden, wenn eine der Breite des Lötkolbens von z.B. 30 mm entsprechende Länge der Lötnaht hergestellt worden ist.

Für die Beheizung des Kolbens wird heute vor allem Propangas, daneben auch Butangas verwendet.

Die Festigkeit der Lötverbindung hängt jeweils im wesentlichen von der Form der Naht im Überlappungsbereich und der Gleichmäßigkeit der Lötung ab.

Aus den vorstehenden Ausführungen ergibt sich, daß die beim Verbinden von Dachrinnen durch Löten notwendigen Arbeiten nicht nur mit einer Reihe zeitaufwendiger, teilweise umständlicher, manueller Tätigkeiten, sondern auch mit einem vergleichsweise großen Lötzinnverbrauch von 30 bis 80 g/m hergestellte Lötnaht verbunden sind.

Hinzu kommt, daß bei Verwendung von besonderen Flußmitteln die Flußmittelreste nach dem Löten sorgfältig entfernt werden müssen, um Korrosionserscheinungen zu vermeiden.

Aus der US—PS 1 924 799 ist eine Vorrichtung zur Herstellung einer Lötverbindung zwischen sich überlappenden Enden von Dachrinnenteilen bekannt, bei der die Dachrinnenteile zwischen zwei ihrem Profil entsprechende Spannbacken, von denen die innere an der äußeren schwenkbar angelenkt ist, einspannbar sind. Diese Lötvorrichtung hat sich wegen ihrer umständlichen Handhabung in der Praxis nicht durchsetzen können.

Aufgabe der vorliegenden Erfindung ist die Entwicklung einer verbesserten Möglichkeit zur Herstellung der Lötverbindungen zwischen Dachrinnenteilen in ihrem Überlappungsbereich.

Die Lösung dieser Aufgabe besteht darin, daß die innere Spannbacke schwenkbar mit einer Spindel verbunden und die Spindel in einem mit der äußeren Spannbacke verbundenen höhenverstellbaren Spannbügel gelagert ist.

Im Rahmen der besonderen Ausgestaltung der Vorrichtung ist die innere Spannbacke quer zur Längsrichtung der Dachrinnenteile verschieblich an der Spindel angeordnet, so daß sich ihr Druckpunkt in jeder Höhe des Spannbügels selbst einstellt.

Um eine gute Wärmeleitung zu gewährleisten, sollte wenigstens die Spannfläche der inneren Spannbacke kammartig gestaltet werden.

Ein weiterer Vorteil für das Flammlöten ergibt sich, wenn im Bereich der Mitte der oberen Spannbacke ein Gasbrenner halbkreisförmig schwenkbar gelagert ist. Der Gasbrenner kann wechselseitig angebracht werden.

Die Erwärmung des Überlappungsbereichs kann bei Anwendung des Flammlötens dadurch erfolgen, daß die Flamme unmittelbar auf das Dachrinnenmaterial oder mittelbar auf die innere und/oder äußere Spannbacke gerichtet ist.

Es ist aber auch möglich, eine oder beide Spannbacken elektrisch aufheizbar zu gestalten.

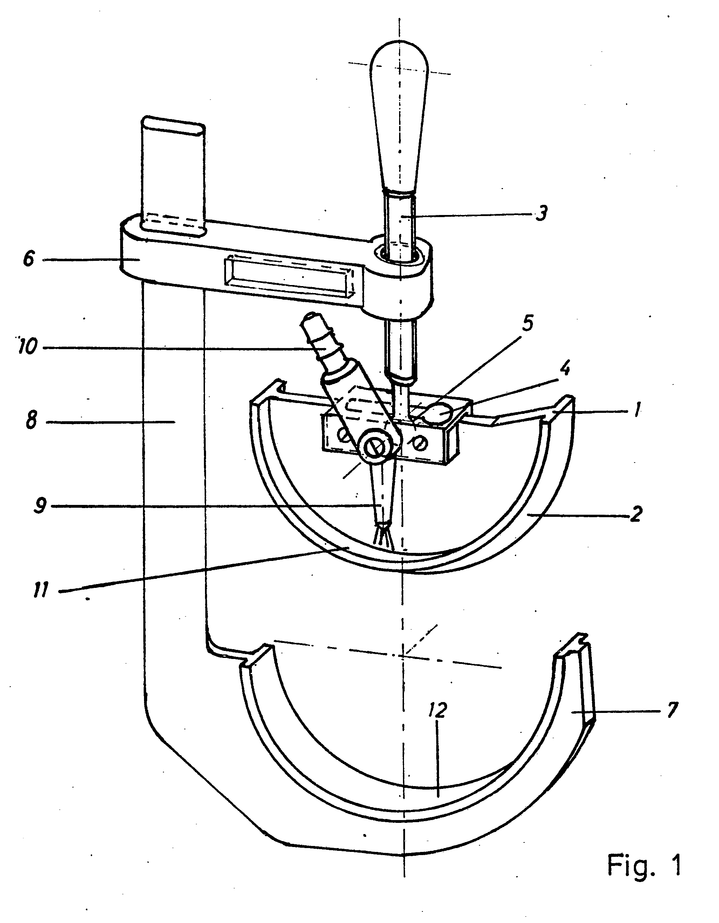

Die in der Zeichnung beispielhaft dargestellte erfindungsgemäße Vorrichtung wird im folgenden näher beschrieben:

In der Fig. ist die perspektivische Ansicht einer Vorrichtung zur Herstellung der Lötverbindung von halbrunden Dachrinnenteilen dargestellt. Die im Überlappungsbereich der Dachrinnenteile, die innenliegende Dachrinne erfassende, eine Erhöhung 1 zur Wasserfalzseite aufweisende Spannbacke 2 ist an der Spindel 3 schwenkbar und quer zur Längsrichtung der Dachrinnenteile verschieblich in dem Langloch 4 mit Hilfe des Kugelgelenks 5 gelagert. Die Spindel 3 ist in dem Spannbügel 6 drehbar gelagert. Der Spannbügel 6 ist auf einem mit der äußeren Spannbacke 7 fest verbundenen Führungsteil 8 verschiebbar angeordnet. In der Mitte der inneren Spannbacke 2 ist der Gasbrenner 9, dem über die Leitung 10 Gas zugeführt wird, schwenkbar angelenkt. Die Spannflächen 11, 12 der Spannbacken 2, 7 verlaufen in Spannstellung parallel.

Die mit der Erfindung erzielten Vorteile bestehen darin, daß eine einfachere Handhabung, sicherere Lötverbindung durch größere Lötnahtbreite und -länge, verbesserte Wirtschaftlichkeit durch Lotersparnis sowie 50%ige Zeiteinsparung und höhere Sicherheit für den Handwerker gewährleistet sind.

## Patentansprüche

1. Vorrichtung zur Herstellung einer Lötverbindung zwischen sich überlappenden Enden von Dachrinnenteilen, zwischen denen ein Lot deponiert, vorzugsweise ein Lotband eingelegt ist, bestehend aus zwei gegeneinander preßbaren Spannbacken (2, 7), von denen die innere Spannbacke (2) schwenkbar angelenkt ist und zwischen deren im verspannten Zustand parallel zueinander verlaufenden, dem Profil der Dachrinnenteile vom Wulst bis zum Wasserfalz im Bereich der sich überlappenden Enden angepaßten Spannflächen (11, 12) die sich überlappenden, auf Löttemperatur zu erwärmenden Enden aufeinander preßbar sind, *dadurch gekennzeichnet,* daß innere Spannbacke (2) schwenkbar mit einer Spindel (3) verbunden und die Spindel in einem mit der äußeren Spannbacke (7) verbundenen höhenverstellbaren Spannbügel (6) gelagert ist.

2. Vorrichtung nach Anspruch 1, *dadurch gekennzeichnet,* daß die innere Spannbacke (2) quer zur Längsrichtung der Dachrinnenteile verschiebbar an der Spindel (3) angeordnet ist.

3. Vorrichtung nach den Ansprüchen 1 und 2, *dadurch gekennzeichnet,* daß wenigstens die Spannfläche (11) der inneren Spannbacke (2) kammartig gestaltet ist.

4. Vorrichtung nach einem oder mehrenen der Ansprüche 1 bis 3, *dadurch gekennzeichnet,* daß wenigstens eine der Spannbacken (2, 7) elektrisch aufheizbar ist.

5. Vorrichtung nach einem oder mehrenen der Ansprüche 1 bis 3, *dadurch gekennzeichnet,* daß and der inneren Spannbacke (2) ein Gasbrenner schwenkbar gelagert ist.

## Claims

1. A soldering device for gutter sections in lapping relation wherein the soldering material especially a soldering strip is deposited between the lapping of the gutter sections comprising a pair of clamping jaws which clamping surfaces are shaped and proportioned appropriate to the profile of the gutter section from the beaded edge to the water groove to fit while being soldered snugly upon the faces of lapping gutter section by the inner clamping jaw hingedly connected at a clamping screw pivoted on a vertically adjustable clamp connected to the outer clamping jaw.

2. A soldering device according to claim 1 wherein the inner clamping jaw is slidable on the screw transversely the longitudinal direction of the gutter sections.

3. A soldering device according to claims 1 and 2 wherein at least the clamping surface of the inner clamping jaw is shaped comb-like.

4. A soldering device to any preceding claim wherein at least one clamping jaw is heated electrically.

5. A soldering device to any preceding claim wherein a gas burner is hingedly supported at the inner clamping jaw.

## Revendications

1. Dispositif pour la fabrication d'une jonction par soudure entre des extrémités d'éléments de chéneau qui se recouvrent et entre lesquelles on a déposé une soudure, de préférence une bande de soudage, ledit dispositif consistant en deux mors de sèrrage (2, 7) pouvant être pressés l'un contre l'autre, le mors intérieur (2) étant raccordé en pivotement et les surfaces de serrage (11, 12) de ces mors—qui sont parallèles entre elles quand elles sont tendues et qui sont adaptées au profil des éléments du chéneau depuis le bourrelet jusqu'au chenal d'écoulement de l'eau dans la zone des extrémités qui se recouvrent—permettant de presser l'une contre l'autre les extrémités qui se recouvrent et qu'il faut chauffer à la température de soudage, le dispositif étant caractérisé par le fait que le mors de serrage intérieur (2) est raccordé en pivotement à un axe (3) et que l'axe est logé dans une bride de serrage (6) déplaçable verticalement et raccordée au mors de serrage extérieur (7).

2. Dispositif suivant la revendication 1 caractérisé en ce que le mors de serrage intérieur (2) est disposé de manière à pouvoir se déplacer sur l'axe (3) transversalement à la direction longitudinale des éléments de chéneau.

3. Dispositif suivant les revendications 1 et 2 caractérisé par le fait qu'au moins la surface de serrage (11) du mors de serrage intérieur (2) est en forme de peigne.

4. Dispositif suivant une ou plusieurs des revendications 1 à 3 caractérisé par le fait qu'un au moins des mors de serrage (2, 7) peut être chauffé à l'électricité.

5. Dispositif suivant une ou plusieurs des revendications 1 à 3 caractérisé par le fait qu un brûleur à gaz est monté en pivotement sur le mors de serrage intérieur (2).

Fig. 1